# EUROPEAN PATENT APPLICATION

(11) **EP 2 608 452 A1**
(43) Date of publication of application: **26.06.2013**
(21) Application number: 11306745.8
(22) Date of filing: 22.12.2011
(51) Int. Cl.: H04L 12/24

(54) **Customer premises equipment device and system and method for controlling a customer premises equipment device**

(71) Applicant: Thomson Licensing, 92130 Issy-les-Moulineaux (FR)
(72) Inventor: Yoshizawa, Takahito, 2850 Boom (BE)
(74) Representative: Lindemann, Robert

(57) **Abstract**

This invention relates to a customer premises equipment device comprising at least a first signal transmission means (24) being capable of communicating with a first auto-configuration server (14) and a second signal transmission means (26) being capable of communicating with a second auto-configuration server (16), wherein a selector means (32) routes communication sessions from the first signal transmission means (24) and the second signal transmission means (26) to a client (36) such that parallel or serial communication for remote management is established. Furthermore, the invention relates to a system for controlling a customer premises equipment device. In addition, the invention relates to a method for controlling a customer premises equipment device.

## Description

### INTRODUCTION

This invention relates to a customer premises equipment device. More particularly, this invention relates to a customer premises equipment device communicating with an auto-configuration server. Furthermore, the invention relates to a system for controlling a customer premises equipment device. In addition, the invention relates to a method for controlling a customer premises equipment device.

### BACKGROUND TO THE INVENTION

Remote management of end-user devices can be achieved through communication between customer-premises equipment (CPE) and auto-configuration servers (ACS) using a specific application layer protocol.

One example of CPE remote management is defined by the CPE WAN Management Protocol (CWMP), also commonly referred to as TR-069, which has been developed by Broadband Forum. This protocol has been used to manage CPE devices such as digital subscriber line gateways which can operate in various technological variants and are commonly referred to as xDSL-GW. In addition, small cellular bases station systems (usually referred to as femtocells) also adopted TR-069 as the remote management protocol to manage the femtocells as they share the same basic CPE characteristics. One of the fundamental tenets of TR-069 is that the CPE device is managed by a single auto-configuration server (ACS) at a given time.

Within TR-069 concept, it is possible to change the ACS that manages the CPE. However, this change is more of a transfer of management role from one ACS to another, which is highly likely to be a permanent change. This transfer is done based on the explicit instruction from the ACS to point to a new ACS by overwriting a specific parameter in the CPE. From the conventional perspective of CPE device such as xDSL-GW, this makes sense in that, only one management entity (i.e. ACS) should be in charge of managing a given CPE. In other words, it is never the intention that more than one ACS can manage the same CPE at the same time. In other words, the concept of having more than one ACS to actively manage a CPE, with multiple active sessions (concurrently or not) is outside the scope of TR-069.

One example remote configuration of a device via a network by means of a remote auto-configuration server (ACS) has been described in WO/2010/102902. The configuration includes creating new data, or modifying or deleting writeable data of the device. The TR-069 CPE WAN management protocol is used for communicating between the ACS and the device. The remote management protocol uses sessions consisting of transactions, a transaction being a single request followed by a single response, wherein within a session, when writeable data has to be created, modified or deleted by the ACS, at least the writeable data are write-locked for other management agents at the transaction level, and wherein the write-lock is released within the session, after a successful configuration and/or after a failure.

The inventor has found a need to provide an improved version of a CPE and of a system for controlling CPEs that provide additional functionality as compared to the prior art systems.

### SUMMARY OF THE INVENTION

According to the invention, there is provided a customer premises equipment device comprising at least a first signal transmission means being capable of communicating with a first auto-configuration server and a second signal transmission means being capable of communicating with a second auto-configuration server, wherein a selector means routes communication sessions from the first and second signal transmission means to a client such that parallel or serial communication for remote management is established.

According to an embodiment of the invention, the selector means handles the individual communication session initiation and termination and hides multiplicity of concurrent communication sessions from the client. According to a further embodiment of the invention, the first signal transmission means and the second signal transmission means respectively comprise a TR-069 signal terminating function.

According to a further embodiment of the invention, the client is capable of performing TR-069 functions.

According to a further embodiment of the invention, the selector means are further controlled by a connection control means that coordinates the remote management operation.

According to a further embodiment of the invention, the connection control means communicates with the selector means and the first signal transmission means and the second signal transmission means.

According to a further embodiment of the invention, the customer premises equipment device according may further comprise a database for storing remotely manageable objects and parameters, preferably by using TR-069.

According to a further embodiment of the invention, the customer premises equipment device is capable of performing femtocell functionality.

In addition, a system for controlling the above outlined customer premises equipment device is provided, which comprises at least a first auto-configuration server and a second auto-configuration server being respectively capable of communicating with the customer premises equipment through the first and second signal transmission means, wherein the first auto-configuration server is a remote server and the second auto-configuration server is a local server.

In the system the local server may be capable of managing and monitoring the customer premises equipment device including configuration, performance management, or fault management.

The remote server may be a network operator server.

In a preferred embodiment, the customer premises equipment device in the system is a femtocell.

The first auto-configuration server and the second auto-configuration server may communicate in parallel or serially with the customer premises equipment device.

Furthermore, a method for controlling a customer premises equipment device through at least a first server and a second server is described, wherein the first server communicates directly with the customer premises equipment device using a TR-069 protocol and the second server communicates via the first server with the customer premises equipment device.

In addition, a method for controlling a customer premises equipment device through at least a first server and a second server is described, wherein the first server communicates directly with the customer premises equipment device using a TR-069 protocol and the second server communicates directly with the customer premises equipment device using a TR-069 protocol.

Existing TR-069 concept does not allow for a CPE to be managed by more than one ACS at any given time, either concurrently (simultaneously), or non-concurrently (serially). If more than one management entity needs to manage the single device, the only method the existing TR-069 concept allows is to have the second management connection to go through the first one. However, such traffic path necessarily create dependency to the first connection (i.e. mobile operator's management system), which may be not desirable from the local IT staffs perspective. Local IT staff may alternatively desires to have a direct local management connection to the femtocells within the enterprise. However, the existing concept in TR-069 cannot meet such need. Management action through the local interface (GUI, CLI, etc.) to the individual CPE is highly inefficient, not scalable, and thus impractical in reality.

Within TR-069 concept, it is possible to change the ACS that manages the CPE. However, this change is more of a transfer of management role from one ACS to another, which is highly likely to be a permanent change. This transfer is done based on the explicit instruction from the ACS to point to a new ACS by overwriting a specific parameter in the CPE. From the conventional perspective of CPE device such as xDSL-GW, this makes sense in that, only one management entity (Le. ACS) should be in charge of managing a given CPE. In other words, it is never the intention that more than one ACS can manage the same CPE at the same time.

In the case of factory-default reset, it is possible to have a situation where the CPE is reconnected with the ACS that is pointed by the factory-default value. However, this case is considered as similar as out-of-the-box first time initialization. In certain femtocell deployment situations, such as enterprise application, there is a need and benefit to allow more than one management entity to manage the femtocell. However, as explained above, the existing TR-069 concept does not allow a CPE to be managed by more than one ACS, either concurrently or non-concurrently.

Femtocell is originally targeted for residential users in mind. In this type of deployment scenario, the femtocell is managed by the mobile operator who owns the license spectrum, and the end users are not expected to have any involvement at all for the proper operation of the device. This is fundamentally no different in the enterprise femtocell system as well. However, what is unique in the enterprise scenario is the presence of the local IT support staff who has direct and indirect involvement in the overall operation and management of the femtocell system within the enterprise, such as initial installation, daily operation monitoring, troubleshooting, etc. When the local IT staff needs to conduct any type of management task of the femtocell in the enterprise environment, he or she obviously require management connection to the femtocell as well. However, as mentioned earlier, the mobile operator who provides the femtocell service usually manages the enterprise femtocells.

The invention addressed this area by explaining a concept and mechanism in which a CPE (femtocell) to be managed by more than one management entity (i.e. ACS) as an alternative management practice in order to accommodate needs, such as enterprise femtocell deployment scenario.

### DETAILED DESCRIPTION OF THE INVENTION

The invention will now be described in greater detail by way of example with reference to the following drawing in which:
Figure 1 shows a schematic view of a system for controlling the customer premises equipment device according to an embodiment of the invention;
Figure 2 shows a further schematic view of a system for controlling the customer premises equipment device according to a further embodiment of the invention; and
Figure 3 shows a schematic view of customer premises equipment device according to an embodiment of the invention.
Figs. 4a and 4b show the time relation with two TR-069 connections.

In the drawing, alike reference numerals refer to alike parts, unless otherwise indicated.

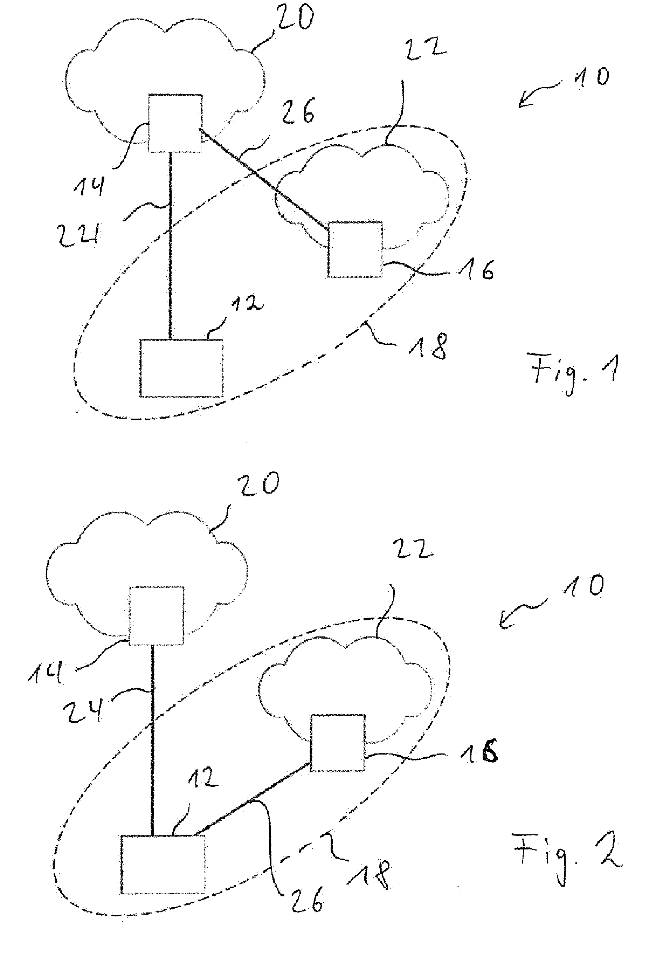

Referring now to Figure 1 in particular, the invention embodied therein comprises a system 10 for controlling a consumer premises equipment device or shortly CPE as indicated by reference numeral 12. The CPE 12 can be a femtocell which is typically managed by a first ACS 14 that is under the control of the Mobile Network Operator (MNO). This is due to the fact that the licensed spectrum that femtocell of CPE 12 uses is owned by the MNO. This arrangement gives the MNO the ability to remotely manage the femtocell of CPE 12. The first ACS 14 is part of the MNO network 20. The first ACS 14 and the CPE 12 are connected using a management connection or more generally a first transmission means 24.

In some femtocell applications, such as a femtocell application within a company or enterprise, there is a need for the local staff (e.g. local IT staff within the enterprise) to be able to manage and monitor the femtocell of CPE 12 as well. This task can include Configuration Management (CM), Performance Management (PM), Fault Management (FM), or the like. This situation necessitates that the local staff to have access to the management connection to the femtocell of CPE 12 by using a second ACS 16. As indicated in Fig. 1, the second ACS 16 and the CPE 12 operate within the same enterprise femtocell as schematically indicated by reference numeral 18. The second ACS 16 and the CPE 12 are connected using a management connection or more generally a second transmission means 26.

The management connection 26 can therefore be made from the enterprise network's perspective through the MNO network 24 as shown in Fig. 1. This maintains existing TR-069 tenet in that, there is only one management connection 24 to the femtocell of CPE 12 through the first ACS 14. In this case, both management traffic from MNO ACS 14 and enterprise ACS 16 goes through a single TR¬069 connection 24 that terminates at the MNO 20.

The system 10, as shown in figure 1 is a feasible embodiment. However, this system 10 necessarily requires the enterprise management capability to rely on the MNO's management connection 24 to be available and accessible, which may not be a preferable solution from the enterprise's perspective if they prefer to have local and direct connection without relying on MNO 20.

In Fig. 2, a system 10 including a direct connection to the femtocell of CPE 12 is shown. In this embodiment, the enterprise has its own management connection 26 to the femtocell CPE 12 directly. In this case, the fundamental tenet of TR-069 stated above is no longer maintained because there are multiple TR-069 connections 24, 26 to the femtocell 12.

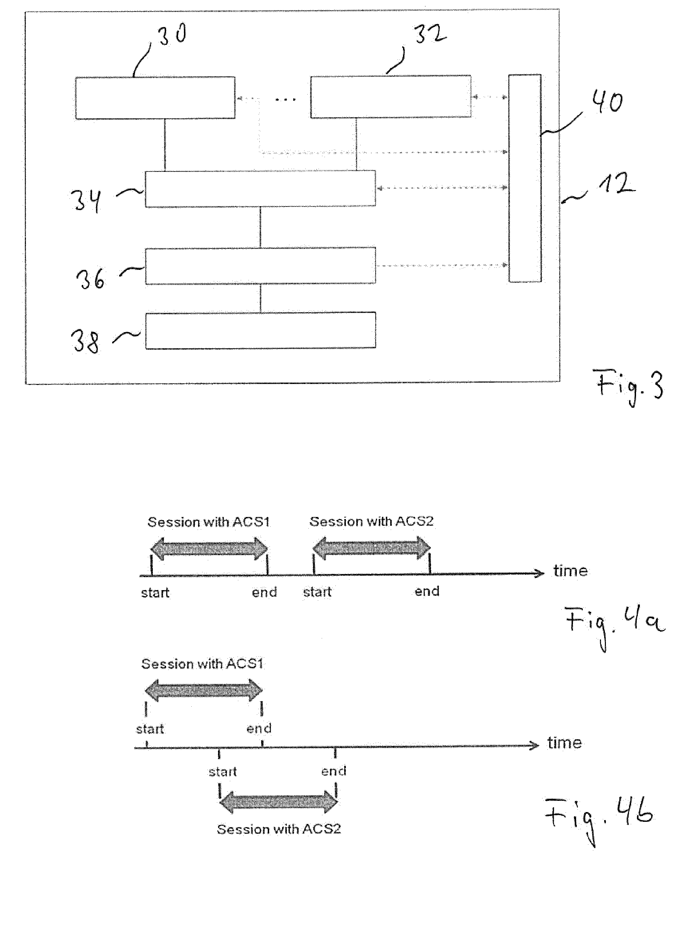

Fig. 3 illustrates a schematic view of CPE 12 according to an embodiment of the invention.

The CPE 12 includes a first TR-069 signalling termination point 30 and a second TR-069 signalling termination point 32, which can respectively communicate to the first ACS 14 and the second ACS 16 using the first and the second communication means 24, 26. In the case of the enterprise femtocell deployment scenario described above, the first termination function 30 can communicate to the first ACS 14 in MNO 20, and the second terminating function in 32 can communicate to the second ACS 16 in the enterprise network 22. In general, it is possible to include a plurality of such termination points, wherein each of them terminates a separate TR-069 session.

As shown in Fig. 3, a selector means or selector function 34 is present which is connected to the first TR-069 signalling termination function 30 and the second TR-069 signalling termination function 32. The selector function 34 performs as a "switch" that selects which of the multiple TR-069 session connections is currently active. The selector function 34 selects the TR¬069 traffic path and passes the traffic in both directions. Especially, when the session traffic is directed from the femtocell 12 to one of the ACSes 14 or 16, the selector function 34 passes the traffic to the appropriate TR-069 session termination function 30 or 32 based on the current active session status. The introduction of multiple TR-069 sessions implies that there can be a possibility of concurrent (simultaneous) sessions present in more than one signalling termination point 30 and 32. In this case, the selector function 34 also handles the individual session initiation and termination and hides multiplicity of such concurrent session to the rest of the system 10.

As further shown in Fig. 3, a TR-069 client 36 is connected to the selector function 34. The TR-069 client 36 is the end point of TR-069 session in the femtocell of CPE 12. The TR-069 client 36 processes all the TR-069 signalling messages, both in sending and receiving directions, in order to execute the remote management of the femtocell of CPE 12 by communicating with the respective ACS 14 or 16. Due to the selector function 34, the TR-069 client 34 is not aware of the multiplicity of the ACSes 14, 16 that it is communicating with on the other end of the communication via either the first communication means 24 or the second communication means 26. In other words, the multiplicities of ACSes 14, 16 are hidden by the selector function 34 or stated differently, the selector function 34 realizes the capability to communicate with multiple ACSs 214, 16 , and as a result, allows multiple TR-069 session communications 30, 32 to be handled.

As shown in Fig. 3, a database 38 is connected to the TR-069 client 36. The database 38 holds all remotely manageable objects and parameters using TR-069. The content in the database 38 can be read and written by the TR-069 client 36 based on the interaction with one or more of ACS 14, 16.

Furthermore, a connection control function 40 coordinates the entire operation of the remote management within the femtocell of CPE 12, and controls the way how one or more TR-069 connections 30, 32 to be handled in the femtocell of CPE 12. The connection control function 40 communicates with the selector function 34 and terminating functions 30 and 32. The control function 40 can send signalling information to them to direct their behaviour, or the latter can send feedback information to the former which can further trigger signalling information by the control function 40.

The signalling to the selector function 34 indicates which of the multiple signalling terminating functions 30, 32 should be used for a given session. The signalling from the terminating functions 30, 32 may include activation or de-activation of the TR-069 connection with the respective ACS 14 or 16. The connection control function also manages which ACS 14 or 16 are allowed for the femtocell of CPE 12 to be managed by the respective ACS. Such information can be provided during the manufacturing, by the local configuration (e.g. CLI, GUI) and by the TR-069 session.

It is important to note that the multiple TR-069 connections 30, 32 can be done by either in a concurrent fashion (simultaneously or parallel) or in a non-concurrent fashion (serially). The time relation with two TR-069 connections is shown in Fig. 4a and 4b.

With respect to Fig. 4b, it is important to note that there may be a possibility that two separate interactions with two ACS 14 or 16 may result in a conflicting result. For example, if ACS 14 writes a value "x1" to a parameter, and at the same time, if ACS 16 writes a value "x2" to the same parameter, the final parameter value depends on the relative timing of the two actions. It is possible to have the connection control function 40 to resolve contention in this case.

Although certain embodiments only of the invention have been described herein, it will be understood by any person skilled in the art that other modifications, variations, and possibilities of the invention are possible. Such modifications, variations and possibilities are therefore to be considered as falling within the spirit and scope of the invention and hence forming part of the invention as herein described and/or exemplified.

This invention having been described in its preferred embodiment, it is clear that it is susceptible to numerous modifications and embodiments within the ability of those skilled in the art and without the exercise of the inventive faculty. Accordingly, the scope of the invention is defined by the scope of the following claims.

All examples and conditional language recited herein are intended for pedagogical purposes to aid the read in understanding the principles of the invention and the concepts contributed by the inventor to furthering the art and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the term "processor" or "controller" should not be construed to refer exclusively to hardware capable of executing software, and may implicitly include, without limitation, digital signal processor ("DSP") hardware, read only memory ("ROM") for storing software, random access memory ("RAM"), and non volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

It is to be understood that the present principles may be implemented in various forms of hardware, software, firmware, special purpose processors, or a combination thereof. Preferably, the present principles may be implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform may also include an operating system and microinstruction code. The various processes and functions described herein may either be part of the microinstruction code or part of the application program (or a combination thereof) that is executed via the operating system. In addition, various other peripheral devices may be connected to the computer platform such as an additional data storage device and a printing device.

It is to be further understood that, because some of the constituent system components and method steps depicted in the accompanying Figures are preferably implemented in software, the actual connections between the system components (or the process steps) may differ depending upon the manner in which the present principles is programmed. Given the teachings herein, one of ordinary skill in the related art will be able to contemplate these and similar implementations or configurations of the present principles.

## Claims

1. A customer premises equipment device comprising at least a first signal transmission means (24) being capable of communicating with a first auto-configuration server (14) and a second signal transmission means (26) being capable of communicating with a second auto-configuration server (16), wherein a selector means (32) routes communication sessions from the first signal transmission means (24) and the second signal transmission means (26) to a client (36) such that parallel or serial communication for remote management is established.

2. The customer premises equipment device according to claim 1, wherein the selector means (34) handles the individual communication session initiation and termination and hides multiplicity of concurrent communication sessions from the client.

3. The customer premises equipment according to claim 1 or 2, wherein the first signal transmission means (24) and the second signal transmission (26) means respectively comprise a TR-069 signal terminating function (30, 32).

4. The customer premises equipment device according to any of claims 1 to 3, wherein the client (36) is capable of performing TR-069 functions.

5. The customer premises equipment device according to any of claims 1 to 4, wherein the selector means (34) are further controlled by a connection control means (40) that coordinates the remote management operation.

6. The customer premises equipment device according to claim 5, wherein the connection control means (40) communicates with the selector means (34), the first signal termination function (30) and the second signal termination function (32).

7. The customer premises equipment device according to any of claims 1 to 6, further comprising a database (38) for storing remotely manageable objects and parameters, preferably by using TR-069.

8. The customer premises equipment device according to any of claims 1 to 7, which is capable of performing femtocell functionality.

9. A system for controlling the customer premises equipment device (12) according to any of claims 1 to 8, which comprises at least a first auto-configuration server (14) and a second auto-configuration server (16) being respectively capable of communicating with the customer premises equipment (12) through the first and second signal transmission means (24; 26), wherein the first auto-configuration server (24) is a remote server and the second auto-configuration server (16) is a local server.

10. The system according to claim 9, wherein the local server (16) is capable of managing and monitoring the customer premises equipment device (12) including configuration, performance management, or fault management.

11. The system according to claim 9 or 10, wherein the remote server (14) is a network operator server.

12. The system according to any of claims 9 to 11, wherein the customer premises equipment device (12) is a femtocell.

13. The system according to any of claims 9 to 12, wherein the first auto-configuration server (14) and the second auto-configuration server (16) communicate in parallel or serially with the customer premises equipment device (12).

14. A method for controlling a customer premises equipment device (12) through at least a first server (14) and a second server (16), wherein the first server (14) communicates directly with the customer premises equipment (12) device using a TR-069 protocol and the second server communicates (16) via the first server (14) with the customer premises equipment device (12).

15. A method for controlling a customer premises equipment device (12) through at least a first server (14) and a second server (16), wherein the first server (14) communicates directly with the customer premises equipment device (12) using a TR-069 protocol and the second server (16) communicates directly with the customer premises equipment device (12) using a TR-069 protocol.
